(19)

Europäisches
Patentamt
European
Patent Office
Office européen
des brevets

(11)  **EP 3 734 500 A1**

(12)  **EUROPEAN PATENT APPLICATION**

(43) Date of publication:
**04.11.2020   Bulletin 2020/45**

(51) Int Cl.:
**G06K 9/00** *(2006.01)*   **G06K 9/62** *(2006.01)*

(21) Application number: **19172465.7**

(22) Date of filing: **03.05.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Axis AB
223 69 Lund (SE)**

(72) Inventors:
• **Danielsson, Niclas
223 69 Lund (SE)**
• **Keskikangas, Axel
223 69 Lund (SE)**

(74) Representative: **AWA Sweden AB
P.O. Box 5117
200 71 Malmö (SE)**

Remarks:
Amended claims in accordance with Rule 137(2)
EPC.

(54)   **METHOD FOR RE-IDENTIFICATION OF OBSERVATIONS**

(57)   The present invention relates to a method and a system for re-identification of observations in a first camera and a second camera, respectively. First re-identification operations are executed to find first re-identification matches between observation pairs using a first metric which is indicative of a degree of similarity of an observation pair. Based on time delays between matching observation pairs, a temporal distribution of transitions between the field of views of the first and the second cameras is estimated. Second re-identification operations are then executed to find second re-identification matches using a second metric. The second metric is obtained by modifying the first metric to depend on the estimated temporal distribution of transitions.

```
METHOD FOR RE-IDENTIFICATION OF
OBSERVATIONS IN A FIRST AND A SECOND         ─ 400
CAMERA

PERFORM FIRST RE-IDENTIFICATION
OPERATIONS TO FIND FIRST RE-IDENTIFICATION   ─ 402
MATCHES BETWEEN OBSERVATION PAIRS BY
EVALUATING A FIRST METRIC

GENERATING A TIME DELAY DATA SET WHICH       ─ 404
INCLUDES A TIME DELAY OF EACH FIRST RE-
IDENTIFICATION MATCH

ESTIMATE A TEMPORAL DISTRIBUTION OF
TRANSITIONS BETWEEN THE FIELD OF VIEW OF     ─ 406
THE FIRST CAMERA AND THE SECOND CAMERA
BASED ON THE TIME DELAY DATA SET

PERFORM SECOND RE-IDENTIFICATION
OPERATIONS TO FIND SECOND RE-
IDENTIFICATION MATCHES BETWEEN               ─ 408
OBSERVATION PAIRS BY EVALUATING A SECOND
METRIC OBTAINED BY MODIFIYING THE FIRST
METRIC TO DEPEND ON THE TEMPORAL
DISTRIBUTION OF TRANSITIONS
```

*FIG 4*

EP 3 734 500 A1

**Description**

Technical field of the invention

The present invention relates to a method and a system for re-identification of observations made by cameras in large scale environments.

Background of the invention

Monitoring and tracking of people, vehicles, or other objects in large scale environments, e.g. a city, a city block, an office, a shopping mall, an airport, a train station, or other environments having a multitude of monitoring cameras is becoming increasingly common. Previously, such monitoring or tracking was performed manually, i.e., a person was keeping an eye on things. That kind of solution is working when the system includes few cameras but scales badly with increased number of cameras.

Implementing re-identification technologies in which a computer identifies an object detected in a camera view as an object previously detected in another camera view makes it possible to monitor and track people in a system having more cameras than is feasible for a human to handle.

The re-identification operation may be built on techniques including modelling appearance information such as feature descriptor extraction and learning similarity metrics. The appearance modelling methods may be based on deep neural networks. The above type of network of cameras would be arranged to search for an object detected in one camera view at some point in time in each of the other camera views at some other point in time. This type of scheme is not sustainable when the number of cameras and the number of people registered by the cameras increases further as there will be too much processing required in comparing the detected object with objects detected in the other camera views. This task will be difficult to perform efficiently even if the appearance modelling methods are based on deep neural networks. Further, the scheme suffers in accuracy when the gallery of objects, i.e., the number of possible matches, becomes too large.

This problem is well known in the art and is addressed by reducing the number of object detections made in other camera views that are to be considered in the process of re-identifying an object detected in a certain camera view. The reduction of the number of object detection to consider may for instance be achieved by taking the structure of the camera network, e.g. spatial and temporal connections between the cameras, into account. The spatio-temporal relation between cameras may be referred to as a camera network topology and is for example described in the article "Object tracking across nonoverlapping views by learning inter-camera transfer models." by X. Chen, K. Huang, and T. Tan, published in Pattern Recognition, 2014. The network topology may be defined as nodes and edges. The nodes may represent camera views or entry/exit zones in camera views and the edges may represent the transition from one node to another.

According to such spatio-temporal relations between cameras, a spatio-temporal connection between a first and a second camera may indicate that objects observed in a field of view of the first camera typically appear in a field of view of the second camera within a certain time window. Thereby the system may only examine object detections made by the second camera within that time window when trying to re-identify an object detection made by the first camera. This approach hence serves to improve on the efficiency of the system since it reduces the number of object detections made by the second camera that are examined for re-identification purposes. Further, it serves to improve on the accuracy of the re-identifications, since the application of the time window reduces the number of possible false re-identification matches. However, even the use of such a time window may not be enough to reach a desired accuracy of the re-identifications. There is thus room for improvements.

Summary of the invention

In view of the above, an object of the present invention is to improve accuracy of re-identification of observations made in a field of view of a first and a second camera.

According to a first aspect, there is provided a method for re-identification of observations in a first camera and a second camera, respectively, the method comprising:

executing first re-identification operations to find first re-identification matches between observation pairs, each observation pair including an observation in a field of view of the first camera and an observation in a field of view of the second camera,
wherein the first re-identification operations include evaluating a first metric which is indicative of a degree of similarity of an observation pair,
generating a time delay data set which, for each observation pair for which a first re-identification match is found, includes a time delay between the observation in the field of view of the first camera and the observation in the field of view of the second camera,

estimating a temporal distribution of transitions between the field of view of the first camera and the field of view of the second camera by fitting a continuous probability density function to the time delays in the time delay data set, and

executing second re-identifications operations to find second re-identification matches between observation pairs, wherein the second re-identification operations are adjusted in relation to the first re-identification operations in that a second metric which is indicative of a degree of similarity of an observation pair is evaluated, wherein the second metric is obtained by modifying the first metric to depend on the estimated temporal distribution of transitions between the field of view of the first camera and the field of view of the second camera.

The proposed method thus performs first re-identification operations to find first matches between observation pairs. For this purpose, each first re-identification operation uses a first metric to evaluate the similarity of an observation pair. The matching observation pairs are further analysed to learn a distribution of the time between making an observation in the field of view of the first camera and making the matching observation in the field of view of the second camera. It has been realized that the time distribution of the matching observation pairs may be used to validate the matching observations pairs, i.e., it may be used to separate valid matches from false matches. Typically, there will be one or more significant peaks in the time distribution. These peaks correspond to the time it typically takes for an object to travel between the field of views of the first and the second camera. Thus, on the one hand, matching observation pairs for which the travel time corresponds to one of the peaks may be considered valid matches. On the other hand, matching observations pairs for which the travel time is further away from the peaks may be considered false matches.

Based on this realization, the method uses the learnt temporal distribution to improve on future re-identification operations, i.e., when performing the second re-identification operations. Specifically, instead of using the first metric when evaluating the similarity, each second re-identification operation uses a second metric which also takes the estimated temporal distribution into account when evaluating the similarity of an observation pair. In that way, the accuracy of the re-identification of the observations may be improved. For example, both the rate of false positives and false negatives may be reduced.

For instance, consider an observation pair which would be assigned a high similarity by the first metric. If re-identification is based on the first metric only, that observation pair would likely be considered a re-identification match. However, that observation pair may be a false positive. False positives may be reduced by comparing the time delay between making the observation in the field of view of the first camera and the observation in the field of view of the second camera to the estimated temporal distribution of transitions. If the time delay is unlikely according to the estimated temporal distribution, the observation pair may be a false positive. By modifying the similarity assigned by the first metric based on the temporal distribution, the observation pair may instead be assigned a lower similarity. As a result, the false positive is less likely to be considered as a re-identification match.

Conversely, consider an observation pair which would be assigned a low similarity by the first metric. If re-identification is based on the first metric only, that observation pair would likely not be considered a re-identification match. However, that observation pair may be a false negative. False negatives may also be detected by comparing the time delay between making the observation in the field of view of the first camera and the observation in the field of view of the second camera to the estimated temporal distribution of transitions. If the time delay is likely according to the estimated temporal distribution, the observation pair may be a false negative. By modifying the similarity assigned by the first metric based on the temporal distribution, the observation pair may instead be assigned a higher similarity. As a result, the false negative is more likely to be considered as a re-identification match.

By *re-identification* is generally meant associating an observation of an object with another observation of an object as being observations of the same object. In other words, re-identification aims at finding matching pairs of observations. As used herein, the re-identification is made between cameras. In other words, observations of an object made in a field of view of a first camera are associated with observations of the same object made in a field of view of a second camera.

By an *observation* is generally meant an observation of an object made in an image captured by the first or the second camera. The object may typically be a person. However, it may also be other types of objects, such as animals or vehicles.

By a *re-identification operation* is meant a sequence of process steps applied to a pair of observations to perform re-identification of the two observations in the pair. Such process steps may generally include calculating similarity of the pair of observations. If the similarity is high enough the observation may be considered as a re-identification match.

For the purpose of calculating similarity of an observation pair, a *metric* which is indicative of a degree of similarity of the observation pair may be used. Such a metric may be expressed in the form of a similarity score which increases with increasing similarity or a distance metric which decreases with increasing similarity.

By *adjusted re-identification* operation is meant that one or more of the processing steps carried out to perform re-identification of an observation pair are adjusted. For example, the calculation of the metric which is indicative of similarity may be adjusted.

By a *transition* between the field of view of the first camera and the field of view of the second camera is meant a transition of an object between the field of view of the first camera and the field of view of the second camera. Such a transition will be associated with a time delay, i.e., the time it takes for the object to travel from the field of view of the first camera to the field of view of the second camera. As different objects may travel at different speeds, the time delays observed for different observation pairs will vary. Generally, the time delays associated with the observed transitions will follow a distribution which is referred to herein as a *temporal distribution of transitions.*

The first and the second camera may have non-overlapping fields of view. However, the method may also be applied to pairs of cameras having overlapping fields of view. For example, the method may be applied to pairs of cameras in a camera network where some pairs of cameras have non-overlapping fields of view and other pairs of cameras have overlapping fields of view. In the case where the cameras have non-overlapping fields of view the time delays will al, the time delay between observations in different camera field of views will be different from zero. However, for cameras having overlapping fields of view, the time delay may be equal to zero since the observations are made at the same time.

The second metric may be obtained by modifying the first metric to depend on the estimated temporal distribution of transitions such that, when used to evaluate an observation pair, the second metric indicates a lower degree of similarity of the observation pair when a time delay associated with the observation pair is less likely according to the estimated temporal distribution compared to when the time delay is more likely according to the estimated temporal distribution. In this way, observation pairs being associated with unlikely time delays will be suppressed in relation to observation pairs with more likely time delays when the similarity of the observation pairs is evaluated. This makes it easier to separate true re-identification matches from false re-identification matches, thereby increasing the accuracy of the re-identification method.

The second metric may generally be a function of the first metric and a value of the continuous probability density function corresponding to a time delay of an observation pair to be evaluated. The value of the continuous probability density function corresponding to a time delay of an observation pair provides a measure of how likely the time delay is. By making the second metric a function of the value of the continuous probability density function, the likelihood of a time delay may hence be taken into account when calculating similarity of an observation pair.

The function may further depend on a parameter which specifies an impact of the value of the continuous probability density function on the second distance metric. The parameter thus specifies how much account is taken to the value of the continuous probability density function in relation to the first metric when the second metric is evaluated. The parameter may be estimated from training data such that it optimises the accuracy of re-identification for observations in the training data.

In case the first metric and the second metric are distance metrics, the function may decrease as said value of the continuous probability density function increases. In case the first metric and the second metric instead are similarity scores, the function may increase as said value of the continuous probability density function increases. In this way, a higher value of the continuous probability function may contribute to increase the degree of similarity of an observation pair, while a lower value of the continuous probability function may contribute to decrease the degree of similarity of an observation pair. In this context it is noted that a large distance is equivalent to a low similarity and vice versa.

As an example, the second metric may be obtained by multiplying the first metric with a weighting function which depends on said value of the continuous probability density function. In case the first and the second metrics are distance metrics, the weighting function may decrease as said value of the continuous probability density function increases. In case the first and the second metrics instead are similarity score, the weighting function may increase as said value of the continuous probability density function increases. This provides a flexible way of modifying the first metric to depend on the continuous probability density function.

When there are multiple modes in the time delay data set, the continuous probability density function fitted to the time delay data set may be multimodal. For example, a mixture of Gaussian distributions may be fitted to the time delay data set. Multiple modes may, for instance, be present in the time delay data set when objects may take different paths between the field of view of the first camera and the field of view of the second camera. The multiple modes may also reflect different speeds of the objects, such as walking and running, when traveling between the fields of view of the first camera and the second camera. This may be captured by fitting a multimodal distribution to the time delay data set.

A mode of the time delay data set corresponds to a peak of a histogram of the time delay data set. Such a peak may be identified from the histogram. For example, a peak in the histogram may be found by applying a threshold to the frequency values of the histogram. The continuous probability density function may be fitted to have a local maximum for a time delay which corresponds to a peak in a histogram of the time delay data set.

When there are multiple modes in the time delay data set, there will be several distinct peaks in the histogram of the time delay data set. These peaks may be identified by applying a threshold to the frequency values of the histogram as discussed above. The continuous probability density function may be fitted to have a plurality of local maxima for time delays which correspond to different peaks in the histogram of the time delay data set. In this way, the continuous probability density function may model different speeds of the objects, or different paths between camera views. For example, one Gaussian density function may be fitted per peak found in the histogram.

Each observation may be associated with a plurality of features. The features may be related to the appearance of the object being observed. For re-identification applications, features which are indicative of the identity of the object are normally used. This may include features relating to the appearance of the body and clothes of an object. Preferably features which are insensitive to the pose of the object are used. The first and the second metric may be indicative of a degree of similarity of the features associated with an observation in the field of view of the first camera and an observation in the field of view of the second camera. For example, the features may be stored in a vector, referred to as an appearance vector herein. This facilitates the comparison of one observation to another in that the metrics may operate on the appearance vectors. While the first metric may operate on the appearance vectors only, the second metric also operates on the estimated temporal distribution of transitions between the two cameras.

The first re-identification operations may include comparing the evaluated first metric to a first threshold to find the first re-identification matches. For example, if the first metric indicates that the degree of similarity of an observation pair is above the first threshold, the observation pair is considered a re-identification match, and otherwise not. In a similar manner, the second re-identification operations may include comparing the evaluated second metric to a second threshold to find the second re-identification matches, wherein the second threshold is different from the first threshold. Since the second metric is a modified version of the first metric, it is advantageous to also use a modified threshold when performing the second re-identification operations.

The first and the second thresholds may be set based on statistics regarding values of the first and the second metric as evaluated by the first and the second re-identification operations, respectively. By setting the thresholds in this way, the accuracy of the first and the second re-identification operations may be further improved.

In more detail, the method may further include generating a first data set which includes the first metric for observation pairs as evaluated by the first re-identification operations. As will be described later, the values of the first metric for observation pairs which are true matches and the values of the first metric for observation pairs which are non-matches will turn up as different peaks in a histogram of the first data set. These peaks may each be modelled by a curve, such as a Gaussian curve, which may then be used to set the first threshold value. Thus, the method may further comprise matching a first and a second curve to a histogram of the first data set and determining the first threshold from the first and the second curves. For example, the first threshold may be set to a value for which the first and the second curve intersects or overlaps.

Similarly, the method may further comprise generating a second data set which includes the second metric for observation pairs as evaluated by the second re-identification operations, matching a third and a fourth curve to a histogram of the second distance data set, and determining the second threshold from the third and the fourth curve.

According to a second aspect, there is provided a camera network implementing the method of the first aspect.

According to a third aspect, there is a provided a method for re-identification of observations in a camera network including a plurality of cameras, comprising: identifying a camera network topology including nodes and edges, and performing the method according to the first aspect on each pair of nodes connected by an edge. By way of example, the number of cameras may be larger than 10, larger than 100, or larger than 1000.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description. Hence, it is to be understood that this invention is not limited to the particular component parts of the device described or steps of the methods described as such device and method may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a sensor" or "the sensor" may include several sensors, and the like. Furthermore, the word "comprising" does not exclude other elements or steps.

## Brief description of the drawings

Other features and advantages of the present invention will become apparent from the following detailed description of a presently preferred embodiment, with reference to the accompanying drawings, in which

Fig. 1 illustrates a camera network which may implement embodiments of the invention.
Fig. 2 illustrates a camera network system according to embodiments.
Fig. 3a and 3b illustrate camera network topologies associated with the camera network system of Fig. 2.
Fig. 4 is a flow chart of a method for re-identification of observations in a first and a second camera according to embodiments.

Fig. 5 illustrates a distribution of re-identification distances calculated using a first distance metric.

Fig. 6 illustrates a temporal distribution of transitions between a first and a second camera.

Fig. 7 illustrates distributions of re-identification distances calculated by using a first and a second distance metric, respectively.

Further, in the figures like reference characters designate like or corresponding parts throughout the several figures.

Detailed description of embodiments

The present invention relates to re-identification of people, vehicles, or other objects in large scale environments, e.g. a city, a city block, an office, a shopping mall, an airport, a train station, or other environments having a multitude of monitoring cameras.

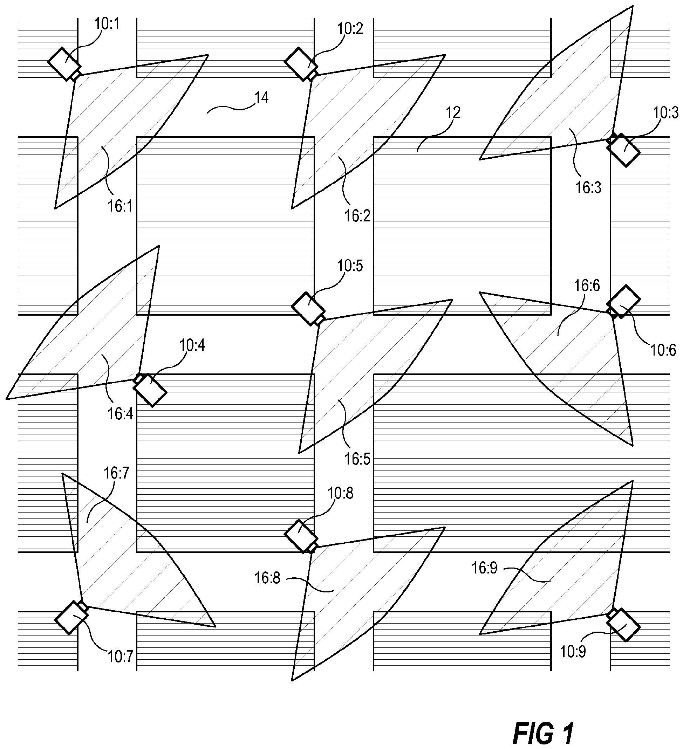

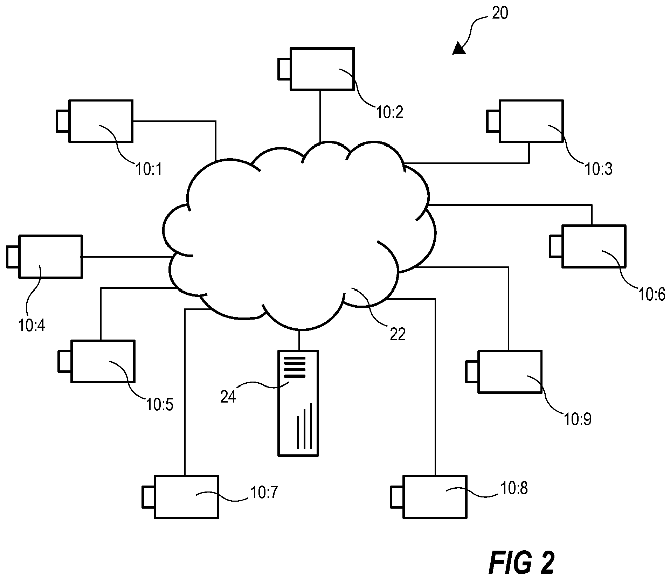

In Fig. 1 there is depicted a multitude of cameras 10 arranged to surveil, monitor, or track objects in a city environment including buildings 12 and streets 14. Operations of surveillance, monitoring, and tracking will all be included in the term monitoring in the description of the present invention. The camera views 16 of the cameras 10 are not overlapping and therefore there will be discontinuations in video capturing a specific object moving throughout the monitored environment. In order to track movement of objects between the different camera views 16 the cameras are connected in a camera network system 20 as shown in Fig. 2. The camera network system 20 includes the cameras 10 which are connected to a communication network 22 and to a central server 24. The communication network may be any type of communication network, e.g. a LAN, a WAN, the Internet, a wireless network, a wired network, a mesh network, a cellular network, etc.

Depending on the design of the system 20 the central server 24 may not be needed. For example, if the system 20 is completely distributed over the cameras, then the central server 24 is not necessary. In such a distributed design, the control and execution of all the surveillance functions are performed in the cameras 10. However, if present, a central server 24 may be arranged to control and execute all of the surveillance functions or it may be arranged to handle part of them while the cameras handle part of them, in a partly distributed system.

For monitoring and tracking in a camera network, such as the one depicted in Fig. 1 and 2, where the cameras do not overlap it is common to apply re-identification algorithms as described in the background of the invention. Re-identification algorithms in general extract an appearance vector from the observation that is to be re-identified. An observation may include image information of an object, its movement, a track, a time point, a time range, etc. A track may include data defining a path of the object in a camera view. For example, a track of an object may include cropped out image data of the object for a plurality of image frames. Then the algorithm is arranged to compare this appearance vector with appearance vectors of other candidate observations and calculate the distance, or equivalently the similarity, in appearance between each pair. The candidate observation resulting in the smallest distance (or highest similarity) is presented as the most likely candidate for corresponding to the observation tested. The skilled person is familiar with the details re-identification algorithms and therefore we will not discuss it in more detail herein.

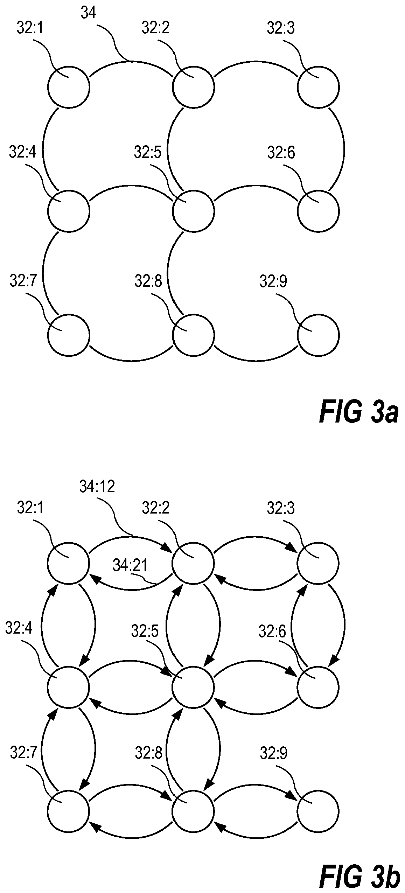

A camera network topology, see Figs 3a-b, may limit the number of candidate observations that has to be compared with the presently processed observation and may thereby make the re-identification operation more efficient in that the number of candidate observations becomes fewer. A camera network topology of the camera network of Fig. 1 may look like the topology depicted in Fig 3a. In the figure each camera 10:1-9 is related to a specific node 32:1-9. The edges 34 between the nodes indicates that there is a possible path for the object to travel between two camera views without being registered in another camera's view. Thereby an observation made in camera 10:1, corresponding to node 32:1, only has to be compared with candidate observations in the cameras 32:2 and 32:4, because those are the cameras that would have captured such observations previously. It should be noticed that there is no edge 34 between node 32:9 and 32:6. This is because there is no direct path between cameras 10:9 and 10:6 as is clearly seen in Fig. 1. Hence, edges are only arranged between nodes where there is a direct path between the corresponding two cameras 10, i.e. between two nodes representing two camera views not intercepted by a third camera view. A node in the network topology may also be representing an entry/exit zone in a specific camera view. An edge between a first and a second camera may include data defining a temporal distribution of transitions for the transition between the field of view of a first camera and the field of view of the second camera. That temporal distribution may be used when performing re-identifications of observations between the first and the second camera as will be explained later.

In Fig. 3b the same network topology as in Fig. 3b is depicted. However, the edges in this network topology is dedicated to a specific travel direction or transition direction between two camera views. For example, the edge 34:12 concerns traveling in the direction from node 32:1 to node 32:2, while the edge 34:21 concerns the opposite traveling direction. This may be useful if parameters of the re-identification differ depending on if the observed object travelled in one direction or the other, i.e. from a first camera to a second camera or from the second camera to the first camera. In some embodiments it is feasible to arrange parallel edges having the same direction. Such parallel edges may represent different traveling paths or different travelling performance. For example, different parallel edges may be associated with and carry information regarding different peaks in a distribution of transition times between the nodes.

When setting up the camera network system 20 for the first time, a camera network topology, such as the one illustrated in Fig. 3a, is generated. Each camera in the system is represented by a node in the camera network topology. The nodes are then processed pairwise and edges between nodes where there is a direct path for the objects to travel are set up as will be described in more detail below. The processing of pairs of nodes may be performed in parallel, i.e. more or less simultaneously, or in series, i.e. one after the other.

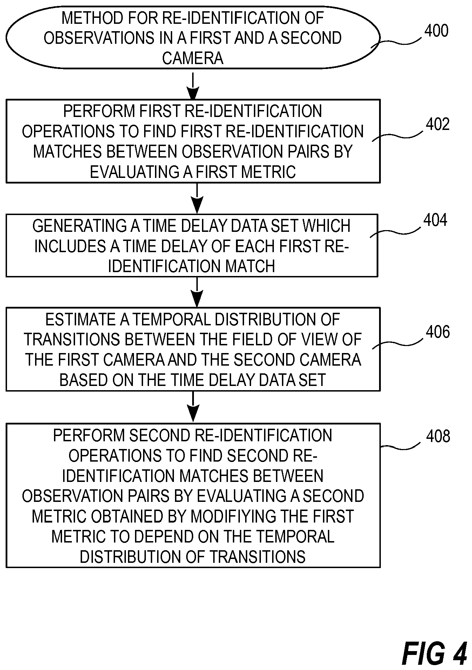

In the following, a process applied by the camera network 20 to a first node corresponding to a first camera and a second node corresponding to a second camera will be described with reference to the flow chart of Fig. 4. More specifically, a method 400 for re-identification of observations in a first camera and a second camera having non-overlapping fields of view will be described.

This method 400 may begin with performing a plurality of first re-identification operations, step 402. Each of the first re-identification operations is performed with respect to an observation pair. A predetermined number of first re-identification operations, e.g. a thousand operations corresponding the same number of observation pairs, may be enough to get a useable data set. The observation pairs each comprise an observation in a field of view of the first camera and an observation in the field of view of the second camera.

Each first re-identification operation evaluates a first metric for an observation pair. The first metric indicates how similar the two observations of the pair are. In more detail, the first metric may take the appearance vectors of the two observations as input and provide a distance between the appearance vectors as output. An appearance vector is a vector of features which are associated with the observation. As known in the art, the appearance vector for an observation may be received at the output of a neural network which has been specifically trained to associate observations with appearance vectors. Such neural networks may be trained to associate observations with appearance vectors specifically for re-identification purposes. Hence the appearance vector does not reflect appearance in general, but appearance characteristics which are relevant for determining whether two images depict the same object (typically a person) or not. Accordingly, the appearance vector includes appearance characteristics from which the identity of the object may be distinguished.

The first metric may hence be a distance metric representing the difference between the appearance vectors of a pair of observations, i.e., it may also be referred to as re-identification difference. For example, a Euclidean distance metric may be used. However, it is understood that, equivalently, any type of metric which is indicative of the similarity between two appearance vectors could be used, such as a similarity score.

In some embodiments, the observation in one of the camera views is only compared with previous observations in the other camera view that were registered for at a maximum of $T_{max}$ moments ago. $T_{max}$ hence serves as a maximum limit for a time delay between an observation in the field of view of the first camera and an observation in the field of view of the second camera. Only observation pairs being associated with a time delay which is below the maximum limit will be subject to the first re-identification operations.

The time period $T_{max}$ may be estimated from the camera density of the system 20. For example, it may be estimated from a most likely or an average geographic distance $I_d$ between cameras. This density may be estimated by the person setting up the system 20. The density may then be used to calculate a maximum time period $T_{max}$ for comparison of observations, i.e. the camera network will not compare observations for re-identification where a transition time is larger than the maximum time period $T_{max}$. A transition time in this description means the time it takes for an object to travel from the camera view of one camera to the camera view of another camera. In this way a temporal limit may save the system 20 from a lot of unlikely comparisons. In some embodiments this maximum time period $T_{max}$ will be calculated as three times the estimated distance $I_d$ from the camera density divided by an estimated normal speed for the objects moving around in the monitored environment. This simple approach will limit the number of comparisons and still be very likely to provide relevant results. In other embodiments the maximum time period is estimated by the person setting up the system 20.

The system 20 then compares the distances calculated for the observation pairs using the first metric to a first threshold. If the distance is below the threshold, the observation pair is considered to be a re-identification match, i.e., a validly re-identified observation. If a similarity score is instead used as a first metric, observation pairs with similarity scores above the threshold would be considered re-identification matches.

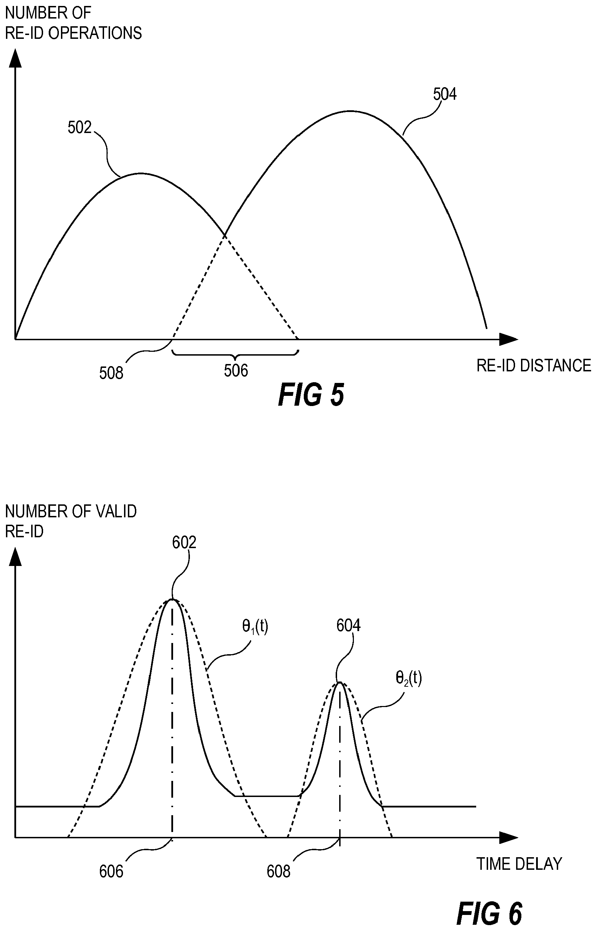

The system 20 may calculate the first threshold on basis of the re-identification distances of the observation pairs which were determined in step 402. The set of re-identification distances resulting from the first re-identification operations is referred to herein as the first distance data set. More specifically, the system 20 may calculate a histogram of the re-identification distances. The histogram is then modelled using two curves in order to determine the first re-identification threshold for the presently processed pair of nodes. One of the curves represents the distribution of correct matchings 502, and the other curve represents erroneous matchings 504, see Fig. 5. Re-identification distances 506 for which the two curves overlap may be interpreted as representing uncertain matchings. Hence, by setting the first threshold to the re-identification distance 508 of the far left of the curve of the erroneous matchings 504, there will be no false positive re-identifications. However, some correct matches will be missed, i.e., there will be false negatives. A value for the first threshold for the pair of nodes would according to this methodology be selected somewhere among the re-identification values of the overlap 506. The curves 502, 504, may be modelled as Gaussian curves. The modelling of the Gaussian curves may be executed by a program such as the EM algorithm for fitting of Gaussian Mixture Models (GMM).

Now returning to Fig. 4, the system 20 goes on to register a time delay between an observation in one camera view and a validly re-identified observation in the other camera view in a time delay data set, step 404. The re-identification observations used for generating the time delay data set may be observations also used in generating the first distance data set, it may be re-identification observations made after performing re-identification operations for the first distance data set, or a combination of both.

When a predetermined number of validly re-identified observations has been made or when validly re-identified observations have been made during a predetermined time period, the time delay data set is analysed.

The analysis may include identifying if there are any distinct peaks in a histogram of the time delays. This may, for example, be done by thresholding a ratio between the highest and the lowest value of the histogram. If no distinct peak is found, it may be concluded that there should be no edge interconnecting the first node representing the first camera and the second node representing the second camera, and the processing of the pair of nodes is ended.

If a distinct peak is found in the histogram, the system 20 may set up an edge between the first node representing the first camera and the second node representing the second camera.

The system 20 then proceeds to estimate a temporal distribution of transitions between the fields of view of the first and the second camera on basis of the time delay data set. For this purpose, the system 20 may fit a continuous function to the time delay data set. In particular, the system 20 may fit a continuous probability density function (PDF) to the time delay data set. For example, a Gaussian PDF may be fitted to time delay data set using a maximum likelihood technique. The fitted PDF may be normalised such that its maximum value is equal to one.

Fig. 6 illustrates an exemplary histogram of the time delays in the time delay data set. The illustrated histogram is multimodal, i.e., it has several distinct peaks. In such situations, a multimodal pdf is preferably fitted to the time delay data set. The system 20 may analyse the histogram to identify the number of peaks 602, 604, in the data set and to determine at what time delay such a peak or these peaks are positioned 606, 608. The determination of number of peaks may be achieved in a number of ways. One way is to try to fit an increasing number of curves to the time delay data set, e.g., using the above-mentioned EM algorithm, until it is not possible anymore. Another way is to set a threshold and count the peaks above the threshold. The skilled person would know even more ways of determining the number of peaks.

A time delay data set only showing one peak may be interpreted as there is a single physical path between the camera views and that the objects moves at substantially the same speed. In such cases it is usually enough to fit a unimodal PDF to the time-delay data set, such as a single Gaussian PDF. The unimodal PDF may be fitted to have its maximum for the time delay corresponding to the mode.

A multimodal time delay data set may be interpreted as there being a plurality of paths between the camera views, that there is one or a plurality of stops on the way where many objects tend to linger, or any other plausible reason. In such cases, a multimodal PDF may be fitted to the time delay data set. For example, a mixture of continuous PDFs, one per mode, may be fitted to the time delay data set, such as a mixture of Gaussian PDFs. The multimodal PDF may be fitted to have a local maximum for each time delay corresponding to a mode.

The fitting of a continuous PDF to the time delay data set is further illustrated in Fig. 6. When a time delay 606 related to a peak 602 in the histogram of time delays has been determined, a continuous PDF $\theta_1(t)$ having a peak corresponding to the peak 602 of the time delay data set may be fitted. As shown, the continuous PDF $\theta_1(t)$ may have a maximum at the corresponding time delay 606. For illustration purposes, the continuous PDF $\theta_1(t)$ has been re-scaled in Fig. 6 to be on the same scale as the histogram.

When there is more than one peak in the histogram, further PDFs may be fitted to the histogram. In the example of Fig. 6, a second continuous PDF $\theta_2(t)$ is fitted to the second peak 604. The second PDF $\theta_2(t)$ has a maximum for the time delay 608 corresponding to the second peak 604. The continuous PDFs $\theta_1(t)$, $\theta_2(t)$, may be generated as a function using any curve fitting algorithm or as a lookup table. In some embodiments the time dependent transition likelihoods $\theta_1(t)$, $\theta_2(t)$, are modelled as Gaussian curves. For instance, the above-mentioned EM-algorithm may be used.

The resulting continuous PDF is hence a mixture, i.e., a weighted sum, of the PDFs $\theta_1(t)$ and $\theta_2(t)$. The ratio between the weights associated with the PDFs in the mixture may be set to reflect the relation in number of valid re-identifications between the two peaks in the time delay data set.

When the continuous PDF has been generated, it may be stored in connection to the edge between the nodes representing the first and the second cameras. It may then be provided to the re-identification algorithm when a re-identification operation is requested for the edge. The continuous PDF is used in the re-identification algorithm to improve its performance.

In order to increase the accuracy of the re-identification, the system 20 may use the estimated temporal distribution of transitions when performing second re-identification operations on observation pairs, step 408. The second re-identification operations may operate on the same observation pairs as the first re-identification operations, on a separate set of observation pairs, or on an overlapping set of observation pairs. The second re-identification operations are adjusted in relation to the first re-identifications in that the estimated temporal distribution of transitions is used to adjust the first re-identification operations with the probability that a detected transition occurred. For example, if the estimated temporal distribution indicates that a detected delay time has a low probability, the similarity indicated by the first metric may be reduced, while if the detected delay time has a high probability, the similarity indicated by the first metric may be increased. In that way, the second metric may indicate a lower degree of similarity of the observation pair when a time delay associated with the observation pair is less likely according to the estimated temporal distribution compared to when the time delay is more likely according to the estimated temporal distribution.

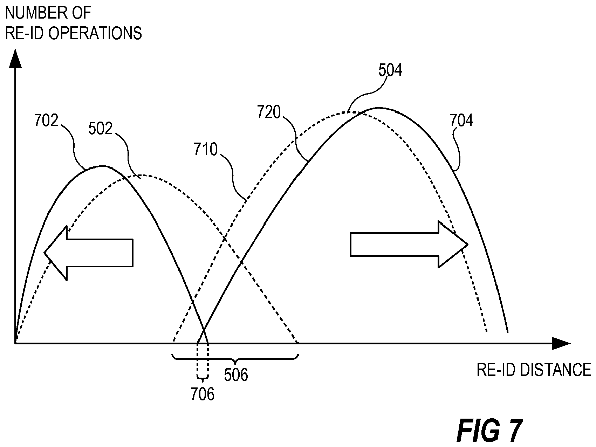

The effects of taking the estimated distribution of transitions into account is schematically illustrated in Fig. 7. In Fig. 7, the dashed curve 710 illustrates the distribution of re-identification distances obtained by applying the first distance metric to a plurality of observation pairs. As explained in conjunction with Fig. 5, the distribution will typically have a first peak being associated with true re-identification matches, see curve 502, and a second peak associated with false re-identification matches, see curve 504. There is also a region of overlap 506 which represents uncertain re-identification matches.

The solid curve 720 illustrates the distribution of re-identification distances obtained by applying the second distance metric, i.e., after modifying the first distance metric to depend on the estimated temporal distribution of transitions. Since the delay time of true re-identification matches typically are associated with a higher probability than delay times of false re-identification matches, the use of the estimated temporal distribution typically tends to further separate the peaks associated with true and false re-identifications. As a result, it becomes easier to separate true re-identification matches from false re-identification matches, i.e., the accuracy of the re-identification increases. This is visible in Fig. 7 in that the region 706 of uncertain re-identification matches when the second distance metric is used is smaller than the corresponding region 506 when the first distance metric is used.

It is to be understood that there may still be some false matches that accidentally happen to occur with a transition time being associated with a high probability. Those will also have their distance reduced by this methodology. Similarly, true matches of the same object that happens outside of the likely time interval will have their distance increased. However, since the occurrence of such cases is relatively rare, the overall performance of the re-identification will still be improved by the proposed method.

The first metric may be modified based on the continuous PDF evaluated at a delay time detected for an observation pair. In other words, the second metric may be a function of the first metric and a value of the continuous PDF corresponding to a time delay of an observation pair to be evaluated. When processing an observation pair, the system 20 may thus evaluate the first metric for the observation pair based on appearance vectors as described above. The system 20 may further detect a time delay between the observation in the first camera and the observation in the second camera and evaluate the continuous PDF for the detected time delay. The system 20 may then calculate the second metric as a function of the evaluated first metric and the evaluated value of the continuous PDF.

In a particular embodiment, a second distance metric $d'$ may be calculated from a first distance metric $d$ and the continuous PDF $\theta(t_d)$ according to the following equation:

$$d' = \begin{cases} d(1 - \lambda\theta(t_d)) & \text{if } t_1 \leq t_d \leq t_2 \\ \infty & \text{if } t_d < t_1 \text{ or } t_d > t_2 \end{cases} \qquad \text{equation 1}$$

where $t_d$ is the time delay between the two observations, and $t_1$ and $t_2$ are time delay values defining a range between which the function is valid. The values $t_1$ and $t_2$ may be estimated from the continuous PDF of the time delays. For example, $t_1$ and $t_2$ may be set to the mean value of the time delays plus and minus three standard deviations, respectively. The variable $\lambda$, $0 < \lambda \leq 1$, is a parameter used to control how much effect the continuous PDF should have on the re-identification. A higher value of $\lambda$ gives more impact of the continuous PDF and vice versa. In equation 1, it is assumed that the PDF has been normalised such that it has a maximum value of one.

Using the function of equation 1, the second distance metric d' hence decreases as the value of the continuous PDF increases for a fixed value of the first distance metric d. In other words, observation pairs with more likely time delays will be assigned smaller distances (i.e., higher similarity) than observation pairs with less likely time delays.

While the above example suggests calculating the second distance metric $d'$ by weighting the first distance metric $d$ using a weighting function, it is understood that many other options are available and falls within the scope of this disclosure. For instance, it would be possible to replace equation 1 by the following expression

$$d' = \begin{cases} d - \lambda\theta(t_d) & \text{if } t_1 \le t_d \le t_2 \\ \infty & \text{if } t_d < t_1 \text{ or } t_d > t_2 \end{cases} \qquad \text{equation 2}$$

for some $\lambda > 0$.

The system 20 may then compare the calculated second metric to a second threshold for determining if the re-identification is to be considered successful. For example, if the second distance metric $d'$ is lower than the second threshold the re-identification is considered close enough to be interpreted as a match. By using the second metric and not the first metric, more accurate re-identifications are obtained.

The second threshold may be different from the first threshold described above in relation to the first metric. The second threshold may be predetermined. Specifically, the second threshold may be determined by the system 20 in a similar manner as the first threshold as explained above in connection to Fig. 5. In more detail, the system 20 may generate a second distance data set which includes re-identification distances calculated using the second metric for observation pairs. The observation pairs used in this case may be the same set of observation pairs used in step 408 or may be a different set of observation pairs. Referring to Fig. 7, a third curve 702 and a fourth curve 704 may be fitted to the second distance data set in the same way as explained above in conjunction with Fig. 5. The second threshold may then be estimated on basis on the third curve 702 and the fourth curve 704. For example, the second threshold may be set to the distance for which the two curves intersect, or to another value in the range 706 where the two curves overlap. The so determined second threshold may be saved in connection to the edge between the first and the second camera in the camera network topology.

It will be appreciated that a person skilled in the art can modify the above-described embodiments in many ways and still use the advantages of the invention as shown in the embodiments above. For example, a similarity score may be used as a metric instead of a distance metric. Further, other functions between the first metric and the second metric may be used. Thus, the invention should not be limited to the shown embodiments but should only be defined by the appended claims. Additionally, as the skilled person understands, the shown embodiments may be combined.

**Claims**

1. A method for re-identification of observations in a first camera and a second camera, respectively, wherein the first and the second camera have non-overlapping fields of view, the method comprising:

   executing first re-identification operations to find first re-identification matches between observation pairs, each observation pair including an observation in a field of view of the first camera and an observation in a field of view of the second camera,
   wherein the first re-identification operations include evaluating a first metric which is indicative of a degree of similarity of an observation pair,
   generating a time delay data set which, for each observation pair for which a first re-identification match is found, includes a time delay between the observation in the field of view of the first camera and the observation in the field of view of the second camera,
   estimating a temporal distribution of transitions between the field of view of the first camera and the field of view of the second camera by fitting a continuous probability density function to the time delays in the time delay data set, and
   executing second re-identifications operations to find second re-identification matches between observation pairs,
   wherein the second re-identification operations are adjusted in relation to the first re-identification operations in that a second metric which is indicative of a degree of similarity of an observation pair is evaluated, wherein the second metric is obtained by modifying the first metric to depend on the estimated temporal distribution of transitions between the field of view of the first camera and the field of view of the second camera.

2. The method of claim 1, wherein the second metric is obtained by modifying the first metric to depend on the estimated temporal distribution of transitions such that, when used to evaluate an observation pair, the second metric indicates a lower degree of similarity of the observation pair when a time delay associated with the observation pair is less likely according to the estimated temporal distribution compared to when the time delay is more likely according to the estimated temporal distribution.

3. The method of claim 1 or 2, wherein the second metric is a function of the first metric and a value of the continuous probability density function corresponding to a time delay of an observation pair to be evaluated.

**4.** The method of claim 3, wherein said function further depends on a parameter which specifies an impact of the value of the continuous probability density function on the second distance metric.

**5.** The method of claim 3 or 4, wherein the first metric and the second metric are distance metrics, and wherein said function decreases as said value of the continuous probability density function increases.

**6.** The method of claim 5, wherein the second metric is obtained by multiplying the first metric with a weighting function which depends on said value of the continuous probability density function, wherein the weighting function decreases as said value of the continuous probability density function increases.

**7.** The method of any one of the preceding claims, wherein, when there are multiple modes in the time delay data set, the continuous probability density function fitted to the time delay data set is multimodal.

**8.** The method of any one of the preceding claims, wherein the continuous probability density function is fitted to have a local maximum for a time delay which corresponds to a peak in a histogram of the time delay data set.

**9.** The method of claim 6, wherein the continuous probability density function is fitted to have a plurality of local maxima for time delays which correspond to different peaks in the histogram of the time delay data set.

**10.** The method according to any one of the preceding claims, wherein the first and the second metric are indicative of a degree of similarity of features associated with an observation in the field of view of the first camera and an observation in the field of view of the second camera.

**11.** The method according to any one of the preceding claims, wherein the first re-identification operations further include comparing the evaluated first metric to a first threshold to find the first re-identification matches, and the second re-identification operations further include comparing the evaluated second metric to a second threshold to find the second re-identification matches, wherein the second threshold is different from the first threshold.

**12.** The method according to claim 11, further comprising generating a first data set which includes the first metric for observation pairs as evaluated by the first re-identification operations, matching a first and a second curve to a histogram of the first data set, and determining the first threshold from the first and the second curve.

**13.** The method according to claim 11 or 12, further comprising generating a second data set which includes the second metric for observation pairs as evaluated by the second re-identification operations, matching a third and a fourth curve to a histogram of the second data set, and determining the second threshold from the third and the fourth curve.

**14.** A camera network implementing the method according to any one of claims 1-13.

**15.** A method for re-identification of observations in a camera network including a plurality of cameras, comprising:

identifying a camera network topology including nodes and edges, and
performing the method according to claims 1-13 on each pair of nodes connected by an edge.

**Amended claims in accordance with Rule 137(2) EPC.**

**1.** A method performed by a camera network for re-identification of observations in a first camera and a second camera, respectively, wherein the first and the second camera have non-overlapping fields of view, the method comprising:

executing first re-identification operations to find first re-identification matches between observation pairs, each observation pair including an observation in a field of view of the first camera and an observation in a field of view of the second camera,
wherein the first re-identification operations include evaluating a first metric which is indicative of a degree of similarity of an observation pair,
generating a time delay data set which, for each observation pair for which a first re-identification match is found, includes a time delay between the observation in the field of view of the first camera and the observation in the field of view of the second camera,
estimating a temporal distribution of transitions between the field of view of the first camera and the field of view of the second camera by fitting a continuous probability density function to the time delays in the time delay data set, and

executing second re-identifications operations to find second re-identification matches between observation pairs,

wherein the second re-identification operations are adjusted in relation to the first re-identification operations in that a second metric which is indicative of a degree of similarity of an observation pair is evaluated, wherein the second metric is obtained by multiplying the first metric with a weighting function that depends on a value of the continuous probability density function corresponding to a time delay of an observation pair to be evaluated.

2. The method of claim 1, wherein said weighting function further depends on a parameter which specifies an impact of the value of the continuous probability density function on the second distance metric.

3. The method of claim 1 or 2, wherein the first metric and the second metric are distance metrics, and wherein said weighting function decreases as said value of the continuous probability density function increases.

4. The method of any one of the preceding claims, wherein, when there are multiple modes in the time delay data set, the continuous probability density function fitted to the time delay data set is multimodal.

5. The method of any one of the preceding claims, wherein the continuous probability density function is fitted to have a local maximum for a time delay which corresponds to a peak in a histogram of the time delay data set.

6. The method of claim 5, wherein the continuous probability density function is fitted to have a plurality of local maxima for time delays which correspond to different peaks in the histogram of the time delay data set.

7. The method according to any one of the preceding claims, wherein the first and the second metric are indicative of a degree of similarity of features associated with an observation in the field of view of the first camera and an observation in the field of view of the second camera.

8. The method according to any one of the preceding claims, wherein the first re-identification operations further include comparing the evaluated first metric to a first threshold to find the first re-identification matches, and the second re-identification operations further include comparing the evaluated second metric to a second threshold to find the second re-identification matches, wherein the second threshold is different from the first threshold.

9. The method according to claim 8, further comprising generating a first data set which includes the first metric for observation pairs as evaluated by the first re-identification operations, modelling a histogram of the first data set by a first and a second curve, wherein the first curve represents a distribution for correctly matched observation pairs and the second curve represents a distribution for erroneously matched observation pairs, and determining the first threshold as a value where the first and the second curve overlap.

10. The method according to claim 8 or 9, further comprising generating a second data set which includes the second metric for observation pairs as evaluated by the second re-identification operations, modelling a histogram of the second data set by a third and a fourth curve, wherein the third curve represents a distribution for correctly matched observation pairs and the fourth curve represents a distribution for erroneously matched observation pairs, and determining the second threshold as a value where the third and the fourth curve overlap.

11. A camera network implementing the method according to any one of claims 1-10.

12. A method for re-identification of observations in a camera network including a plurality of cameras, comprising:

identifying a camera network topology including nodes and edges, and
performing the method according to claims 1-10 on each pair of nodes connected by an edge.

FIG 1

FIG 2

32:1 34 32:2 32:3

32:4 32:5 32:6

32:7 32:8 32:9

*FIG 3a*

34:12 32:1 32:2 32:3

34:21

32:4 32:5 32:6

32:7 32:8 32:9

*FIG 3b*

```
┌─────────────────────────────────────────┐
│   METHOD FOR RE-IDENTIFICATION OF        │      400
│ OBSERVATIONS IN A FIRST AND A SECOND     │
│             CAMERA                       │
└─────────────────────────────────────────┘
                    │
                    ▼
┌─────────────────────────────────────────┐
│     PERFORM FIRST RE-IDENTIFICATION      │      402
│ OPERATIONS TO FIND FIRST RE-IDENTIFICATION│
│  MATCHES BETWEEN OBSERVATION PAIRS BY    │
│       EVALUATING A FIRST METRIC          │
└─────────────────────────────────────────┘
                    │
                    ▼
┌─────────────────────────────────────────┐
│ GENERATING A TIME DELAY DATA SET WHICH   │      404
│  INCLUDES A TIME DELAY OF EACH FIRST RE- │
│         IDENTIFICATION MATCH             │
└─────────────────────────────────────────┘
                    │
                    ▼
┌─────────────────────────────────────────┐
│   ESTIMATE A TEMPORAL DISTRIBUTION OF    │      406
│ TRANSITIONS BETWEEN THE FIELD OF VIEW OF │
│ THE FIRST CAMERA AND THE SECOND CAMERA   │
│   BASED ON THE TIME DELAY DATA SET       │
└─────────────────────────────────────────┘
                    │
                    ▼
┌─────────────────────────────────────────┐
│     PERFORM SECOND RE-IDENTIFICATION     │      408
│       OPERATIONS TO FIND SECOND RE-      │
│     IDENTIFICATION MATCHES BETWEEN       │
│ OBSERVATION PAIRS BY EVALUATING A SECOND │
│  METRIC OBTAINED BY MODIFIYING THE FIRST │
│     METRIC TO DEPEND ON THE TEMPORAL     │
│      DISTRIBUTION OF TRANSITIONS         │
└─────────────────────────────────────────┘
```

*FIG 4*

**FIG 5**

**FIG 6**

FIG 7

**EP 3 734 500 A1**

Europäisches Patentamt
European Patent Office
Office européen des brevets

# EUROPEAN SEARCH REPORT

Application Number

EP 19 17 2465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/286081 A1 (KOPERSKI MICHAL [FR] ET AL) 4 October 2018 (2018-10-04)<br>* abstract *<br>* paragraphs [0003], [0016], [0023], [0030] - [0033] *<br>* figure 2 * | 1-15 | INV.<br>G06K9/00<br>G06K9/62 |
| X | US 2011/141288 A1 (HUANG CHUNG-HSIEN [TW] ET AL) 16 June 2011 (2011-06-16)<br>* abstract *<br>* paragraphs [0010], [0044] - [0046], [0049], [0055], [0057] * | 1-15 | |
| A | CHEN XIAOTANG ET AL: "Object tracking across non-overlapping views by learning inter-camera transfer models",<br>PATTERN RECOGNITION,<br>vol. 47, no. 3, 24 June 2013 (2013-06-24), pages 1126-1137, XP028784668,<br>ISSN: 0031-3203, DOI: 10.1016/J.PATCOG.2013.06.011<br>* abstract *<br>* sections 2 and 3 * | 1-15 | |

TECHNICAL FIELDS SEARCHED (IPC)

G06K

The present search report has been drawn up for all claims

| Place of search | Date of completion of the search | Examiner |
|---|---|---|
| The Hague | 15 October 2019 | Bouganis, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 734 500 A1**

## ANNEX TO THE EUROPEAN SEARCH REPORT
## ON EUROPEAN PATENT APPLICATION NO.

EP 19 17 2465

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2019

| Patent document cited in search report | Publication date | Patent family member(s) | Publication date |
|---|---|---|---|
| US 2018286081 A1 | 04-10-2018 | NONE | |
| US 2011141288 A1 | 16-06-2011 | TW 201120408 A<br>US 2011141288 A1 | 16-06-2011<br>16-06-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **X. CHEN ; K. HUANG ; T. TAN.** Object tracking across nonoverlapping views by learning inter-camera transfer models. *Pattern Recognition,* 2014